# EUROPÄISCHE PATENTSCHRIFT

(11) **EP 2 790 943 B1**
(45) Veröffentlichungstag und Bekanntmachung des Hinweises auf die Patenterteilung: **18.05.2016**
(21) Anmeldenummer: 12809191.5
(22) Anmeldetag: 13.12.2012
(51) Int. Cl.: B60K 6/12, F16H 61/4096

(54) **VERFAHREN ZUM BETREIBEN EINES HYDRAULISCHEN HYBRID-ANTRIEBSYSTEMS**
METHOD FOR OPERATING A HYDRAULIC HYBRID DRIVE SYSTEM
PROCÉDÉ DE CONTRÔLE D'UN SYSTÈME D'ENTRAÎNEMENT HYBRIDE HYDRAULIQUE

(30) Priorität: 16.12.2011 DE 102011121500
(43) Veröffentlichungstag der Anmeldung: 22.10.2014
(73) Patentinhaber: Robert Bosch GmbH, 70442 Stuttgart (DE)
(72) Erfinder: HEINE, Dennis, 74889 Sinsheim (DE); NUBER, Sebastian, 41564 Kaarst (DE); SENGER, Michael, 74392 Freudental (DE); MORRISON-REED, Elliot, Farmington Hills, MI 48331 (US); THULKE, Mirko, 93404 Saint-Quen Cedex (FR)
(86) Internationale Anmeldenummer: PCT/EP2012/075396
(87) Internationale Veröffentlichungsnummer: WO 2013/087776

(56) Entgegenhaltungen:
- WO-A2-2008/012558
- US-A- 5 505 527
- US-A1- 2003 110 766

## Beschreibung

### Gebiet der Erfindung

Die vorliegende Erfindung betrifft ein Verfahren zum Betreiben eines hydraulischen Hybrid-Antriebssystems für ein Kraftfahrzeug mit Antriebsrädern, die Reibungsbremsen zum Ausüben eines Reibungsbremsmoments auf die Antriebsräder aufweisen, und ein stufenlos verstellbares Hydraulikgetriebe, das eine motorseitige Hydraulikmaschine und eine mit dieser in direkter Fluidverbindung stehenden radseitigen Hydraulikmaschine aufweist, wobei die Hydraulikmaschinen antriebstechnisch in Reihe und mit den Antriebsrädern des Kraftfahrzeugs verbunden sind, so dass die Hydraulikmaschinen sowohl als Hydraulikpumpen als auch als Hydraulikmotoren betreibbar sind, und mindestens eine Hydraulikfluidenergiespeichervorrichtung, die mit dem Hydraulikgetriebe fluidtechnisch verbunden ist.

Das Einsatzgebiet der vorliegenden Erfindung erstreckt sich auf ein Hybridfahrzeug mit seriellem hydraulischen Antriebsstrang und einer Hydraulikfluidenergiespeichervorrichtung zum Betrieb auf öffentlichen Straßen.

### Hintergrund der Erfindung

Kraftfahrzeuge mit Hybridantrieb zum Betrieb auf öffentlichen Straßen weisen aufgrund umweltschonender Aspekte eine starke Nachfrage auf. Bei den sich derzeitig auf dem Markt befindlichen Kraftfahrzeugen mit Hybridantrieb handelt es sich um elektrische Hybridantriebe, die einen Verbrennungsmotor und mindestens eine elektrische Maschine, welche sowohl als elektrischer Motor als auch als elektrischer Generator betreibbar ist, sowie eine elektrische Speichervorrichtung umfassen. An Stelle einer elektrischen Speichervorrichtung weisen hydraulische Hybrid-Antriebssysteme eine Hydraulikfluidenergiespeichervorrichtung auf in der unter Druck stehende Flüssigkeit gespeichert ist und eine Hydraulikmaschine, die sowohl als Hydraulikpumpe als auch als Hydraulikmotor betreibbar ist. Im Betrieb als Hydraulikpumpe übernimmt die Hydraulikmaschine die Aufgabe eines elektrischen Generators und speist Energie in die Speichervorrichtung ein. Im Betrieb als Hydraulikmotor entspricht die Hydraulikmaschine einem Elektromotor, der die Antriebsräder antreibt.

Eine Betriebsstrategie für ein Hybridfahrzeug mit seriellem elektrischen Antriebsstrang ist allgemein bekannter Stand der Technik. Die Motorsteuerung eines elektrischen Hybridfahrzeugs beinhaltet eine Drehmomentsteuerung und Drehmomentverteilung sowie eine Betriebsstrategie, welche auf die elektrische Speichervorrichtung und der elektrischen Maschine ausgerichtet ist. Sowohl in den Übergängen zwischen verschiedenen Betriebszuständen, als auch bei der Koordination der Momente werden die Besonderheiten eines elektrischen Antriebsstrangs berücksichtigt. Im Wechsel vom Laden zum Entladen der elektrischen Speichervorrichtung limitieren Induktivitäten und Kapazitäten die erreichbaren Schaltzeiten. Jedoch kann eine elektrische Speichervorrichtung unabhängig von seinem Ladezustand und dem Betrag des momentanen Stromflusses in das Bordnetz geschaltet oder von diesem getrennt werden.

Parallele hydraulische Hybrid-Systeme, welche über eine Hydraulikfluidenergiespeichervorrichtung verfügen, jedoch nicht über einen hydraulischen Antriebsstrang sind ebenfalls Stand der Technik und werden insbesondere in HRB (Hydrostatisch Regeneratives Bremssystem)-Müllfahrzeugen betrieben.

WO 2008/012558 A2 offenbart ein hydraulisches Hybrid-Antriebssystems für ein Kraftfahrzeug mit Antriebsrädern und ein stufenlos verstellbares Hydraulikgetriebe, das eine motorseitige Hydraulikmaschine und eine mit dieser in direkter Fluidverbindung stehenden radseitigen Hydraulikmaschine aufweist, wobei die Hydraulikmaschinen antriebstechnisch in Reihe und mit den Antriebsrädern des Kraftfahrzeugs verbunden sind, so dass die Hydraulikmaschinen sowohl als Hydraulikpumpen als auch als Hydraulikmotoren betreibbar sind, und mindestens eine Hydraulikfluidenergiespeichervorrichtung, die mit dem Hydraulikgetriebe fluidtechnisch verbunden ist, wobei die motorseitige Hydraulikmaschine über eine Hochdruckhydraulikleitung und eine Niederdruckhydraulikleitung fluidtechnisch an die radseitige Hydraulikmaschine verbunden ist.

Aus der WO 2006/055978 A1 geht ein elektrohydraulisches Hybrid-Antriebssystem für ein Kraftfahrzeug hervor, bei welchem eine elektrische Maschine, die sowohl als Elektromotor als auch als elektrischer Generator betreibbar ist, von einem Verbrennungsmotor angetrieben wird. Die elektrische Maschine ist über eine direkte Kupplung mit einer ersten von zwei Hydraulikmaschinen, welche zusammen ein Hydraulikgetriebe bilden, betriebstechnisch verbunden, wobei die elektrische Maschine und die motorseitige Hydraulikmaschine mit dem Verbrennungsmotor parallel gekoppelt sind. Zur Energiespeicherung dienen eine fluidtechnisch mit dem Hydraulikgetriebe verbundene Hydraulikfluidenergiespeichervorrichtung, sowie eine elektrische Batterie und eine Superkondensatorbank, welche betriebstechnisch mit der elektrischen Maschine verbunden sind.

### Offenbarung der Erfindung

Ausgehend von dem vorgehend genannten Stand der Technik ist es die Aufgabe der vorliegenden Erfindung, ein hydraulisches Hybrid-Antriebssystems dahingehend zu verbessern, dass ein sanfter Übergang zum Schubbetrieb gewährleistet wird.

Die Aufgabe wird ausgehend von einem Verfahren zum Betreiben eines hydraulischen Hybrid-Antriebssystem gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist die Hydraulikfluidenergiespeichervorrichtung fluidtechnisch mit der Hochdruckhydraulikleitung verbunden. Dies ermöglicht eine Entleerung der Hydraulikfluidenergiespeichervorrichtung, die zu einer Entlastung des Verbrennungsmotors und einer damit verbundenen Kraftstoffeinsparung führt. Durch die Entleerung der Hydraulikfluidenergiespeichervorrichtung wird die radseitige Hydraulikmaschine angetrieben, die wiederum das Antriebsdrehmoment über eine Welle auf die Antriebsräder überträgt.

Beispielsweise ist ein Verbrennungsmotor über eine Kupplung an die motorseitige Hydraulikmaschine gekoppelt. Dadurch überträgt der Verbrennungsmotor das erzeugte Drehmoment auf die motorseitige Hydraulikmaschine, die wiederum über die Hochdruckhydraulikleitung und die radseitige Hydraulikmaschine das Drehmoment an die Antriebsräder leitet. Ein vom gegenwärtigen Raddrehmoment unabhängiger Betrieb des Verbrennungsmotors wird durch diese Anordnung und einer Betriebsstrategie möglich, wobei der Verbrennungsmotor bei einer optimalen Drehzahl arbeitet und somit einen hohen Wirkungsgrad aufweist. Sofern das Drehmoment des Verbrennungsmotors nicht benötigt wird, kann sein Betrieb eingestellt werden.

Erfindungsgemäß wird das zuvor beschriebenen hydraulischen Hybrid-Antriebssystem mit einem Verfahren betrieben, wobei Betriebszustände zur Druck- und Flussanpassung vor und nach einem Schubbetrieb durchlaufen werden, um Druckschläge und Schockwellen im hydraulischen Hybrid-Antriebssystem zu vermeiden, wobei der Schubbetrieb durch eine Entladung der Hydraulikfluidenergiespeichervorrichtung realisiert wird. Dies ist insbesondere zur Ankopplung des Speichers am hydraulischen Hybrid-Antriebssystem nötig. Durch den hohen Druck, welcher in der Hydraulikfluidenergiespeichervorrichtung bei einem hohen Ladezustand gespeichert ist, würde ein Öffnen der Hydraulikfluidenergiespeichervorrichtung zwecks Entlastung des Verbrennungsmotors, mit einem Druckschlag in der Hochdruckhydraulikleitung einhergehen, da die Hochdruckhydraulikleitung gegenwärtig einen geringeren Druck als die Hydraulikfluidenergiespeichervorrichtung aufweist. Dieser Druckschlag wäre für die Insassen des Kraftfahrzeuges deutlich spürbar und würde als unangenehm empfunden werden.

Der Vorteil der erfindungsgemäßen Lösung liegt insbesondere darin, dass das Kraftfahrzeug mit mindestens einem Schubbetrieb, mindestens einem Pre-Schubbetrieb, mindestens einem Post-Schubbetrieb und/oder mindestens einem regenerativem Bremsbetrieb betrieben wird. Diese Betriebsmodi dienen zum Beschleunigen und Abbremsen des Kraftfahrzeugs. Darüber hinaus ist ein Schleichvorgang vorgesehen, welcher eingeleitet wird wenn das Bremspedal gelöst und der Ganghebel auf die Position D (Vorwärts) oder R (Rückwärts) gesetzt ist. Dabei wird über die radseitige Hydraulikmaschine ein kalibrierbares minimales Drehmoment auf die Räder geleitet, wodurch eine sehr geringe Fahrzeuggeschwindigkeit erreicht wird. In einem Grundbetrieb treibt der Verbrennungsmotor die motorseitige Hydraulikmaschine an, wobei die motorseitige Hydraulikmaschine den Bedarf an Druck in der Hochdruckhydraulikleitung der radseitigen Hydraulikmaschine deckt, welche für das Drehmoment der Antriebsräder sorgt.

Vorzugsweise wird vor dem Schubbetrieb der Pre-Schubbetrieb durchlaufen, wobei der Druck in einer Hochdruckhydraulikleitung an dem Druck in der Hydraulikfluidenergiespeichervorrichtung anpasst wird. Durch diese Druckanpassung werden Druckschläge in der Hochdruckhydraulikleitung vermieden. Der Pre-SchubBetrieb wird eingeleitet, wenn der Schubbetrieb durch Freigabebedingungen aktiviert ist, die Nachfrage des Fahrers an Drehmoment einen Grenzwert überschreitet und der Druck der Hydraulikfluidenergiespeichervorrichtung deutlich höher als der Druck in der Hochdruckhydraulikleitung ist. Der Druck aus der Hydraulikfluidenergiespeichervorrichtung liefert einen positiven Drehmomentbeitrag.

Gemäß einer die Erfindung weiter verbessernden Maßnahme wird zur Druckanpassung in der Hochdruckhydraulikleitung ein virtuelles Leerlaufdrehmoment berechnet, welches durch eine Flussanpassung der radseitigen Hydraulikmaschine bereitgestellt wird. Der Druck in der Hochdruckhydraulikleitung steigt stetig an, so dass beim Erreichen eines Druckbetrages der dem Druckbetrag der Hydraulikfluidenergiespeichervorrichtung entspricht ein Ventil der Hydraulikfluidenergiespeichervorrichtung geöffnet wird, wodurch die Hochdruckhydraulikleitung mit dem Druck aus der Hydraulikfluidenergiespeichervorrichtung gespeist wird. Dies führt zu einer Entlastung des Verbrennungsmotors, die sich in einer Kraftstoffeinsparung niederschlägt. Während des Schubbetriebs, wird der Druck in der Hochdruckhydraulikleitung entsprechend der Abnahme des Druckes in der Hydraulikfluidenergiespeichervorrichtung abnehmen, da die motorseitige Hydraulikmaschine im Schubbetrieb keinen Druck generiert.

Es wird weiterhin vorgeschlagen, dass nach dem Schubbetrieb ein Post-Schubbetrieb durchlaufen wird, bei dem eine Entladung der Hydraulikfluidenergiespeichervorrichtung und der damit verbundene Druckabfall in der Hochdruckhydraulikleitung durch eine Zuschaltung der motorseitigen Hydraulikmaschine kompensiert wird. Während des Post-Schubbetriebs wird die motorseitige Hydraulikmaschine aktiviert und beginnt wieder mit der Generierung von Druck für die Hochdruckhydraulikleitung. Die Absicht, ist die Leitungsdruckabnahme zu verlangsamen und den Speicherfluss sanft zu stoppen.

Vorzugsweise wird die Zuschaltung der motorseitigen Hydraulikmaschine bei einem Ladezustand der Hydraulikfluidenergiespeichervorrichtung von weniger als 30% vorgesehen. Ein Ladezustand von weniger als 30% geht mit einem spezifischen Grenzwert des Drucks in der Hochdruckhydraulikleitung einher und leitet den Post-Schubbetrieb ein. Durch das Abfangen des Druckabfalls wird einem Druckschlag beim Wiederantrieb einer völlig entladenen Hochdruckhydraulikleitung vorgebeugt, die von einer völlig entladenen Hydraulikfluidenergiespeichervorrichtung herrührt. Der Post-Schubbetrieb wird durch den Grundbetrieb ersetzt, sobald der Druck in der Hochdruckleitung einen Grenzwert erreicht und der Ladezustand der Hydraulikfluidenergiespeichervorrichtung unter einem Grenzwert fällt.

Des Weiteren bevorzugt wird zum Aufladen der Hydraulikfluidenergiespeichervorrichtung der regenerative Bremsbetrieb vorgesehen, wobei die radseitige Hydraulikmaschine als Hydraulikpumpe fungiert, wodurch der Druck und somit auch die Energie in der Hydraulikfluidenergiespeichervorrichtung erhöht wird. Der regenerative Bremsbetrieb ist abhängig von dem benötigten negativen Raddrehmoment, einigen Freigabebedingungen und einer minimalen Zeit. Dieser Betrieb wird verlassen, sobald der Ladezustand der Hydraulikfluidenergiespeichervorrichtung einen Grenzwert übersteigt, eine der Freigabebedingungen nicht erfüllt wird, das benötigte negative Raddrehmoment einen Grenzwert übersteigt oder die Fahrzeuggeschwindigkeit unter einem Grenzwert fällt. Nach der Aktivierung des regenerativen Bremsvorgangs übermittelt ein Hybridsteuergerät das gegenwärtige regenerative Bremsdrehmoment zu einem Brems-Motorsteuergerät. Das Brems-Motorsteuergerät verteilt das verbliebene Drehmoment an die Reibungsbremsen, so dass sich das benötigte Bremsdrehmoment aus dem gegenwärtigen regenerativen Bremsdrehmoment und dem Reibungsbremsendrehmoment zusammensetzt.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Es zeigen

- Fig.1: eine schematische Darstellung eines hydraulischen Hybrid-Antriebssystems und
- Fig.2: ein Flussdiagramm zur Darstellung des erfindungsgemäßen Verfahrens zum Betreiben eines hydraulischen Hybrid-Antriebssystems.
Detaillierte Beschreibung einer bevorzugten Ausführungsform

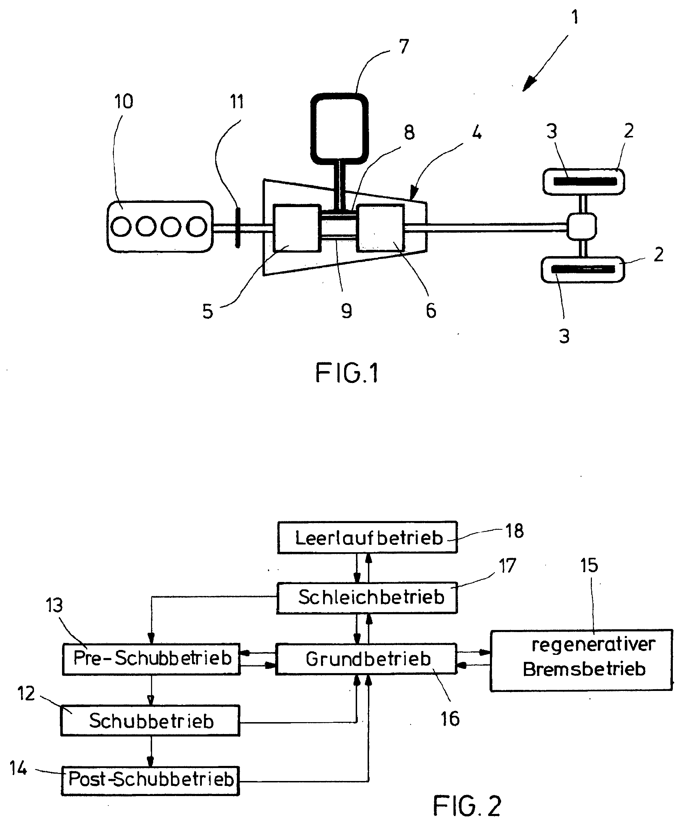

Gemäß Fig.1 besteht das hydraulische Hybridantriebssystem 1 für ein Kraftfahrzeug aus Antriebsräder 2, die Reibungsbremsen 3 zum Ausüben eines Reibungsbremsmoments auf die Antriebsräder 2, und ein stufenlos verstellbares Hydraulikgetriebe 4, das eine motorseitige Hydraulikmaschine 5 und eine mit dieser in direkter Fluidverbindung stehenden radseitigen Hydraulikmaschine 6 aufweist. Die Hydraulikmaschinen 5, 6 sind antriebstechnisch in Reihe und mit den Antriebsrädern 2 des Kraftfahrzeugs verbunden, so dass die Hydraulikmaschinen 5, 6 sowohl als Hydraulikpumpen als auch als Hydraulikmotoren betreibbar sind. Des Weiteren ist eine Hydraulikfluidenergiespeichervorrichtung 7 fluidtechnisch über eine Hochdruckhydraulikleitung 8 mit dem Hydraulikgetriebe 4 verbunden. Die motorseitige Hydraulikmaschine 5 ist über die Hochdruckhydraulikleitung 8 und eine Niederdruckhydraulikleitung 9 fluidtechnisch an die radseitige Hydraulikmaschine 6 verbunden. Ein Verbrennungsmotor 10 ist über eine Kupplung 11 an die motorseitige Hydraulikmaschine 5 gekoppelt und treibt diese an.

Nach Figur 2 befindet sich das Kraftfahrzeug nach dem Motorstart in einem Leerlaufbetrieb 18. Durch das Einlegen eines Gangs geht das Fahrzeug in den Schleichbetrieb 17 über, wodurch ein geringes Drehmoment auf die Antriebsräder 2 übertragen wird. Aus dem Schleichvorgang, kann das Kraftfahrzeug entweder in den Grundbetrieb 16 oder in den Pre-Schubbetrieb 13 übergehen, wobei die Wahl des Betriebszustandes von mehreren Faktoren abhängig ist.

Im Grundbetrieb 17 speist der Verbrennungsmotor 10 über die motorseitige Hydraulikmaschine 5 die Hochdruckhydraulikleitung 8 und treibt dadurch die radseitige Hydraulikmaschine 6 an, die wiederum die Antriebsräder 2 antreibt.

Während des Pre-Schubbetriebs 13 wird der Druck in der Hochdruckhydraulikleitung 8 an dem Druck in der Hydraulikfluidenergiespeichervorrichtung 7 anpasst, sofern die Hydraulikfluidenergiespeichervorrichtung 7 einen ausreichen hohen Ladezustand aufweist. Zur Druckanpassung in der Hochdruckhydraulikleitung 8 wird ein virtuelles Leerlaufdrehmoment berechnet, welches durch eine Flussanpassung der radseitigen Hydraulikmaschine 6 bereitgestellt wird.

Nach dem Pre-Schubbetrieb 13 wird der Schubbetrieb 12 eingeleitet. Während des Schubbetriebs 12, wird der Druck in der Hochdruckhydraulikleitung 8 entsprechend der Abnahme des Druckes in der Hydraulikfluidenergiespeichervorrichtung 7 abnehmen, da die motorseitige Hydraulikmaschine 5 im Schubbetrieb keinen Druck generiert.

Bei einem Ladezustand der Hydraulikfluidenergiespeichervorrichtung 7 von weniger als 30% wird der Post-Schubbetrieb 14 eingeleitet. Während des Post-Schubbetriebs 14 wird die motorseitige Hydraulikmaschine 5 aktiviert und beginnt wieder mit der Generierung von Druck für die Hochdruckhydraulikleitung 8, um die Leitungsdruckabnahme zu verlangsamen und den Speicherfluss sanft zu stoppen.

Ein Übergang in den Grundbetrieb 16 ist sowohl aus dem Schubbetrieb 12 als auch aus dem Post-Schubbetrieb 14 möglich.

Der regenerative Bremsbetrieb 15 wird aus dem Grundbetrieb 16 erreicht. Dieser dient zum Aufladen der Hydraulikfluidenergiespeichervorrichtung 7, wobei die radseitige Hydraulikmaschine 6 als Hydraulikpumpe fungiert, wodurch der Druck und somit auch die Energie in der Hydraulikfluidenergiespeichervorrichtung 7 erhöht wird.

## Patentansprüche

1. Verfahren zum Betreiben eines hydraulischen Hybrid-Antriebssystems (1) für ein Kraftfahrzeug mit Antriebsrädern (2), die Reibungsbremsen (3) zum Ausüben eines Reibungsbremsmoments auf die Antriebsräder (2) aufweisen, und ein stufenlos verstellbares Hydraulikgetriebe (4), das eine motorseitige Hydraulikmaschine (5) und eine mit dieser in direkter Fluidverbindung stehenden radseitigen Hydraulikmaschine (6) aufweist, wobei die Hydraulikmaschinen (5, 6) antriebstechnisch in Reihe und mit den Antriebsrädern (2) des Kraftfahrzeugs verbunden sind, so dass die Hydraulikmaschinen (5, 6) sowohl als Hydraulikpumpen als auch als Hydraulikmotoren betreibbar sind, und mindestens eine Hydraulikfluidenergiespeichervorrichtung (7), die mit dem Hydraulikgetriebe (4) fluidtechnisch verbunden ist, wobei die motorseitige Hydraulikmaschine (5) über eine Hochdruckhydraulikleitung (8) und eine Niederdruckhydraulikleitung (9) fluidtechnisch an die radseitige Hydraulikmaschine (6) verbunden ist, wobei die Hydraulikfluidenergiespeichervorrichtung (7) fluidtechnisch mit der Hochdruckhydraulikleitung (8) verbunden ist,
**dadurch gekennzeichnet, dass** Betriebszustände zur Druck- und Flussanpassung vor und nach einem Schubbetrieb (12) durchlaufen werden, um Druckschläge und Schockwellen im hydraulischen Hybrid-Antriebssystem (1) zu vermeiden, wobei der Schubbetrieb (12) durch eine Entladung der Hydraulikfluidenergiespeichervorrichtung (7) realisiert wird.

2. Verfahren nach Anspruch 1, **dadurch gekennzeichnet, dass** das Kraftfahrzeug mit mindestens einem Schubbetrieb (12), mindestens einem Pre-Schubbetrieb (13), mindestens einem Post-Schubbetrieb (14) und/oder mindestens einem regenerativem Bremsbetrieb (15) betrieben wird.

3. Verfahren nach Anspruch 1 oder 2, **dadurch gekennzeichnet, dass** vor dem Schubbetrieb (12) der Pre-Schubbetrieb (13) durchlaufen wird, wobei der Druck in einer Hochdruckhydraulikleitung (8) an dem Druck in der Hydraulikfluidenergiespeichervorrichtung (7) anpasst wird.

4. Verfahren nach Anspruch 1 oder 3, **dadurch gekennzeichnet, dass** zur Druckanpassung in der Hochdruckhydraulikleitung (8) ein virtuelles Leerlaufdrehmoment berechnet wird, welches durch eine Flussanpassung der radseitigen Hydraulikmaschine (6) bereitgestellt wird.

5. Verfahren nach Anspruch 1 oder 2, **dadurch gekennzeichnet, dass** nach dem Schubbetrieb (12) ein Post-Schubbetrieb (14) durchlaufen wird, bei dem eine Entladung der Hydraulikfluidenergiespeichervorrichtung (7) und der damit verbundene Druckabfall in der Hochdruckhydraulikleitung (8) durch eine Zuschaltung der motorseitigen Hydraulikmaschine (5), kompensiert wird.

6. Verfahren nach einem der vorhergehenden Ansprüche, **dadurch gekennzeichnet, dass** die Zuschaltung der motorseitigen Hydraulikmaschine (5) bei einem Ladezustand der Hydraulikfluidenergiespeichervorrichtung (7) von weniger als 30% vorgesehen wird.

7. Verfahren nach Anspruch 1 oder 2, **dadurch gekennzeichnet, dass** zum Aufladen der Hydraulikfluidenergiespeichervorrichtung (7) der regenerative Bremsbetrieb (15) vorgesehen wird, wobei die radseitige Hydraulikmaschine (6) als Hydraulikpumpe fungiert, wodurch der Druck und somit auch die Energie in der Hydraulikfluidenergiespeichervorrichtung (7) erhöht wird.

## Claims

1. Method for operating a hydraulic hybrid drive system (1) for a motor vehicle with driven wheels (2), which have friction brakes (3) for exerting a friction brake moment on the driven wheels (2), and a continuously adjustable hydraulic transmission (4), which comprises a motor-side hydraulic machine (5) and a wheel-side hydraulic machine (6) in direct fluidic connection therewith, wherein the hydraulic machines (5, 6) are connected in series and to the driven wheels (2) of the motor vehicle for driving, so that the hydraulic machines (5, 6) can be operated both as hydraulic pumps and as hydraulic motors, and at least one hydraulic fluid energy storage device (7) which is connected fluidically to the hydraulic transmission (4), wherein the motor-side hydraulic machine (5) is connected fluidically to the wheel-side hydraulic machine (6) via a high-pressure hydraulic line (8) and a low-pressure hydraulic line (9), wherein the hydraulic fluid energy storage device (7) is connected fluidically to the high-pressure hydraulic line (8), **characterized in that** operating states for pressure and flow adaptation are applied before and after a thrust mode (12), in order to prevent pressure pulses and shock waves in the hydraulic hybrid drive system (1), wherein thrust mode (12) is implemented by a discharge of the hydraulic fluid energy storage device (7).

2. Method according to Claim 1, **characterized in that** the motor vehicle is operated with at least one thrust mode (12), at least one pre-thrust mode (13), at least one post-thrust mode (14) and/or at least one regenerative braking mode (15).

3. Method according to Claim 1 or 2, **characterized in that** before the thrust mode (12), a pre-thrust mode (13) is applied, wherein the pressure in a high-pressure hydraulic line (8) is adapted to the pressure in the hydraulic fluid energy storage device (7).

4. Method according to Claim 1 or 3, **characterized in that** to adapt the pressure in the high-pressure hydraulic line (8), a virtual idle torque is calculated which is provided by a flow adaptation of the wheel-side hydraulic machine (6).

5. Method according to Claim 1 or 2, **characterized in that** after the thrust mode (12), a post-thrust mode (14) is applied in which a discharge of the hydraulic fluid energy storage device (7) and the associated pressure fall in the high-pressure hydraulic line (8) are compensated by connection of the motor-side hydraulic machine (5).

6. Method according to any of the preceding claims, **characterized in that** the motor-side hydraulic machine (5) is connected when the hydraulic fluid energy storage device (7) has a charge state of less than 30%.

7. Method according to Claim 1 or 2, **characterized in that** the regenerative braking mode (15) is provided for charging the hydraulic fluid energy storage device (7), wherein the wheel-side hydraulic machine (6) functions as a hydraulic pump, whereby the pressure and hence also the energy in the hydraulic fluid energy storage device (7) are increased.

## Revendications

1. Procédé pour le fonctionnement d'un système d'entraînement hybride hydraulique (1) pour un véhicule automobile comprenant des roues d'entraînement (2), qui présentent des freins à friction (3) pour exercer un couple de freinage par friction sur les roues d'entraînement (2), et une transmission hydraulique réglable en continu (4) qui présente une machine hydraulique côté moteur (5) et une machine hydraulique côté roue (6) en liaison fluidique directe avec celle-ci, les machines hydrauliques (5, 6) étant connectées par une technique d'entraînement en série et aux roues d'entraînement (2) du véhicule automobile, de telle sorte que les machines hydrauliques (5, 6) puissent fonctionner à la fois en tant que pompe hydraulique et en tant que moteur hydraulique, et au moins un dispositif d'accumulation d'énergie du fluide hydraulique (7) qui est connecté par une technique fluidique à la transmission hydraulique (4), la machine hydraulique côté moteur (5) étant connectée par une technique fluidique à la machine hydraulique côté roue (6) par le biais d'une conduite hydraulique haute pression (8) et d'une conduite hydraulique basse pression (9), le dispositif d'accumulation d'énergie du fluide hydraulique (7) étant connecté par une technique fluidique à la conduite hydraulique haute pression (8),
**caractérisé en ce que** des états de fonctionnement sont traversés pour l'adaptation à la pression et au flux avant et après un fonctionnement en poussée (12) afin d'éviter des chocs de pression et des ondes de choc dans le, système d'entraînement hybride hydraulique (1), le fonctionnement en poussée (12) étant réalisé par une décharge du dispositif d'accumulation d'énergie du fluide hydraulique (7).

2. Procédé selon la revendication 1, **caractérisé en ce que** le véhicule automobile fonctionne avec au moins un fonctionnement en poussée (12), au moins un fonctionnement pré-poussée (13), au moins un fonctionnement post-poussée (14) et/au moins un fonctionnement de freinage régénératif (15).

3. Procédé selon la revendication 1 ou 2, **caractérisé en ce qu'**avant le fonctionnement en poussée (12), le fonctionnement pré-poussée (13) est traversé, la pression dans une conduite hydraulique haute pression (8) étant adaptée à la pression dans le dispositif d'accumulation d'énergie du fluide hydraulique (7).

4. Procédé selon la revendication 1 ou 3, **caractérisé en ce que** pour l'adaptation de la pression dans la conduite hydraulique haute pression (8), un couple de marche à vide virtuel est calculé, lequel est fourni par une adaptation du flux de la machine hydraulique côté roue (6).

5. Procédé selon la revendication 1 ou 2, **caractérisé en ce qu'**après le fonctionnement en poussée (12), un fonctionnement post-poussée (14) est traversé, dans lequel une décharge du dispositif d'accumulation d'énergie du fluide hydraulique (7) et la chute de pression associée dans la conduite hydraulique haute pression (8) sont compensées par un branchement de la machine hydraulique côté moteur (5).

6. Procédé selon l'une quelconque des revendications précédentes, **caractérisé en ce que** le branchement de la machine hydraulique côté moteur (5) est prévu pour un état de charge du dispositif d'accumulation d'énergie du fluide hydraulique (7) inférieur à 30 %.

7. Procédé selon la revendication 1 ou 2, **caractérisé en ce que** pour charger le dispositif d'accumulation d'énergie du fluide hydraulique (7), le fonctionnement de freinage régénératif (15) est prévu, la machine hydraulique côté roue (6) servant de pompe hydraulique, de sorte que la pression et par conséquent également l'énergie dans le dispositif d'accumulation d'énergie du fluide hydraulique (7) soient augmentées.
